Europäisches Patentamt

European Patent Office

Office européen des brevets

(19)

(11) **EP 1 333 600 A1**

(12) **DEMANDE DE BREVET EUROPEEN**

(43) Date de publication:
**06.08.2003 Bulletin 2003/32**

(51) Int Cl.⁷: **H04B 7/26**

(21) Numéro de dépôt: **03075321.4**

(22) Date de dépôt: **03.02.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(30) Priorité: **04.02.2002 FR 0201296**

(71) Demandeur: **Koninklijke Philips Electronics N.V.**
**5621 BA Eindhoven (NL)**

(72) Inventeur: **Thebault, Franck**
**75008 Paris (FR)**

(74) Mandataire: **Chaffraix, Jean**
**Société Civile S.P.I.D.**
**156, Boulevard Haussmann**
**75008 Paris (FR)**

(54) **Dispositif de transmission d'informations, procédé mis en oeuvre dans un tel dispositif, système comportant une pluralité de tels dispositifs et trame utilisée dans un tel système**

(57) Ce dispositif utilise des trames véhiculées sur des porteuses de fréquences différentes (BCCH ext CBCH(SD/8)). Pour pouvoir traiter les informations provenant de ces trames, le dispositif comporte un circuit émetteur-récepteur 10) muni d'une boucle à verrouillage de phase pour un oscillateur local (12). Les informations sont distribuées dans ces trames dans des emplacements tels que la boucle a le temps de verrouiller en phase l'oscillateur local (12) pour la réception d'information contenue dans une autre trame de porteuse différente.

FIG.2

EP 1 333 600 A1

**Description**

L'invention concerne un dispositif de transmission utilisant une pluralité de trames fréquentielles transmises sur des porteuses de fréquences différentes, dispositif comportant des moyens de prélèvement pour prélever des informations sur au moins deux trames.

L'invention trouve d'importantes applications notamment dans les systèmes de radio mobile cellulaire répondant aux normes définissant le système GPRS qui dérive du système GSM bien connu. Du fait que des informations sont transmises sur des trames fréquentielles différentes, il arrive que les dispositifs de transmission perdent des informations. C'est le cas où des informations sont transmises sur des trames fréquentielles BCCH et SMSCB. Dans le temps les informations sont tellement rapprochées que l'oscillateur local du type à asservissement de phase n'a pas le temps de se verrouiller en phase d'un espace de temps d'une trame à l'autre espace de temps de l'autre trame. De l'information est ainsi perdue.

La présente invention propose un dispositif du genre mentionné dans le préambule qui permet d'éviter cette perte d'information lorsque celle-ci présente de l'intérêt pour l'utilisation.

Pour cela, un tel dispositif est remarquable en ce que lesdits moyens de prélèvement sont synchronisés pour recevoir les informations utiles dans au moins deux canaux appartenant à au moins deux trames de porteuses différentes.

L'idée de l'invention consiste à décaler dans le temps les informations intéressantes pour l'utilisateur.

L'invention concerne aussi une trame correspondant aux mesures préconisées par l'invention, telles que lesdites informations intéressantes sont suffisamment séparées dans le temps pour que l'oscillateur local puisse se verrouiller en phase et donc assurer la réception des informations utiles. L'invention concerne un système dans lequel cette trame est mise à contribution, et aussi un procédé de transmission selon lequel les informations intéressantes faisant partie de trames de porteuse de fréquences différentes sont séparées d'une durée suffisante pour qu'une boucle à verrouillage de phase pour un oscillateur local de réception ait le temps de se verrouiller.

La description suivante, faite en regard des dessins ci-annexés, le tout donné à titre d'exemples non limitatifs fera bien comprendre comment l'invention peut être réalisée. Sur les dessins :

La figure 1 montre un système conforme à l'invention,
La figure 2 montre comment des trames sont établies conformément à l'invention.

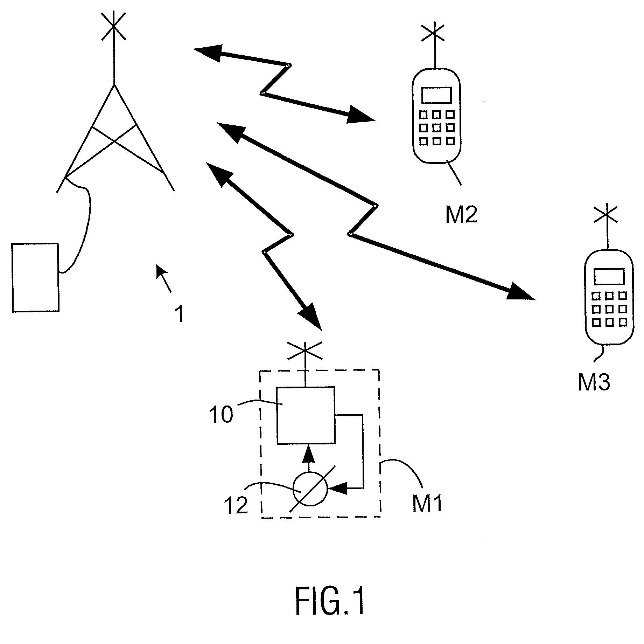

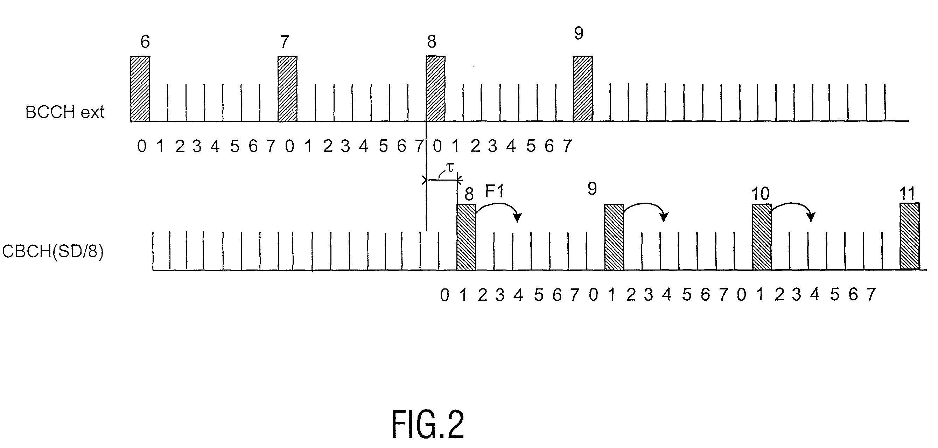

La figure 1 montre un système conforme à l'invention, représenté d'une façon schématique. Ce système répond aux normes GSM qui impliquent une multitude de cellules mises sous la dépendance d'une station de base 1. Une pluralité de dispositifs de transmission ( stations mobiles ) M1, M2, M3,...peuvent se situer dans cette cellule. Sur la figure 1, seule la station M1 est montrée un peu plus en détail. L'échange d'informations entre les stations mobiles s'effectue par voie radio au moyen de trames de signaux multiplexés dans le temps. Deux de ces trames BCCH ext et CBCH(SD/8) sont montrées à la figure 2. Ces trames sont véhiculées par une porteuse d'une certaine fréquence. Pour recevoir et pour émettre ces signaux les stations mobiles sont munies d'un circuit émetteur-récepteur portant la référence 10 à la figure 1 en ce qui concerne la station mobile M1. Ces circuits 10 comportent un oscillateur local 12 faisant partie d'une boucle à verrouillage de phase. Lorsqu'un changement de fréquence s'impose, le verrouillage de cette boucle nécessite un certain temps dont la durée est supérieure aux tranches de temps utilisées par le multiplex temporel constituant lesdites trames. Ainsi, certaines informations risquent d'être perdues lors d'un changement de trames. L'invention propose des mesures pour éviter ce genre d'inconvénients. Elle se situe plus spécialement dans le cadre des normes GSM-GPRS. On pourra à ce sujet consulter la description de la norme plus spécialement visée :

3GPP TS 05.02 -v8.10.0 (2001)

Lorsque la station mobile est dans le mode 51 ( packet idle 51 mode) elle a à lire la tranche de temps Si13 toutes les 30s. Cette tranche de temps est véhiculée sur la trame BCCH ou sa variante étendue BCCH ext (voir 6.3.1.3 de la norme précitée). Le terme « packet idle 51 » concerne le mode GPRS idle mode dans la configuration 51.
Si, donc, cette tranche de temps est disposée sur cette trame BCCH, il y aura un conflit avec les tranches de temps relatives aux blocs de données SMSCB (cas où SMSCB est disposé sur le sous-canal 2 de SD/8).

On rappelle que :

- BCCH ( Broadcast Control Channel) est un canal utilisé pour diffuser des informations relatives à la cellule dans laquelle le mobile se trouve. Sur la figure 2 on a montré par des chiffres 6, 7, 8 et 9 les blocs transmis intéressant la station mobile.
- SMSCB est utilisé pour la diffusion de courts messages, par exemple relatifs à la météo, au trafic routier, etc... Ces blocs sont disposés sur les trames 8 à 11 (modulo 51) dans la configuration SD/8 de CBCH.

En se reportant à la figure 2, on suppose, en guise d'exemple, qu'à la station mobile est affectée la tranche de temps 0 dans le mode idle précité. Si des messages sont émis en utilisant la tranche de temps 1 dans une autre trame de porteuse différente, on se rend compte que le laps de temps τ qui existe entre les tranches de temps qui véhiculent des informations intéressantes est trop court pour que la station mobile puisse les traiter. Il n'y a pas un temps suffisant pour le verrouillage en phase. Pour éviter ce conflit, il est proposé de modifier l'emplacement des tranches de temps, comme le montrent les flèches F1.

Dans le cadre des normes précitées, il est possible, à titre d'exemple de changer la disposition de la manière suivante :

Si Si13 est placée sur BCCH ext, les messages SMSCB seront diffusés selon la configuration SD/4. Si SI13 est placée sur BCCH normal, les messages seront diffusés selon la configuration SD/4 ou SD/8.

**Revendications**

1. Dispositif de transmission utilisant une pluralité de trames fréquentielles transmises sur des porteuses de fréquences différentes, dispositif comportant des moyens de prélèvement pour prélever des informations sur au moins deux trames, **caractérisé en ce que** lesdits moyens de prélèvement sont synchronisés pour recevoir les informations utiles dans au moins deux canaux appartenant à au moins deux trames de porteuses différentes.

2. Dispositif selon la revendications 1 comportant un circuit de réception muni d'un oscillateur local inclus dans une boucle à verrouillage de phase présentant un certain temps de verrouillage, **caractérisé en ce que** les moyens de prélèvement sont synchronisés pour prélever des informations utiles séparées par un laps de temps supérieur ou égal à ce temps de verrouillage.

3. Système de transmission comportant au moins une station de base et au moins un dispositif selon la revendication 1 ou 2 destiné à transmettre des informations intéressantes sur des trames fréquentielles différentes pour les utilisateurs desdits dispositifs, **caractérisé en ce qu'**il comporte des moyens pour émettre ces informations sur des trames fréquentielles différentes en des temps séparés d'un certain laps de temps suffisant pour en permettre une bonne réception.

4. Système de transmission comportant au moins une station de base et au moins un dispositif selon la revendication 2, **caractérisé en ce que** ce laps de temps est au moins égal au temps de verrouillage.

5. Trames utilisées dans un système selon l'une des revendications 3 et 4 véhiculées sur des porteuses différentes, **caractérisées en ce que** les informations intéressantes sont transmises en des temps différents.

6. Trames selon la revendication 5, **caractérisées en ce qu'**elles correspondent aux normes GSM, aux trames « BCCH extended » et CBCH (SD/8) respectivement et **en ce que** les informations intéressantes sont décalées dans le temps.

7. Système selon la revendication 3 ou 4, **caractérisé en ce qu'**il utilise des trames selon la revendication 6

8. Dispositif selon la revendication 1 ou 2, **caractérisé en ce que** les moyens de prélèvement sont synchronisés pour recevoir des informations intéressantes des trames selon la revendication 6.

9. Procédé de transmission mis en oeuvre dans un système selon l'une des revendications 3, 4 et 7 selon lequel les informations intéressantes faisant partie de trames fréquentielle différentes sont séparées d'une durée suffisante pour qu'une boucle à verrouillage de phase pour un oscillateur local de réception ait le temps de se verrouiller.

FIG.1

FIG.2

EP 1 333 600 A1

**Office européen des brevets**

**RAPPORT DE RECHERCHE EUROPEENNE**

Numéro de la demande

EP 03 07 5321

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 978 959 A (CIT ALCATEL) 9 février 2000 (2000-02-09) * abrégé * * colonne 1, ligne 42 - colonne 3, ligne 42 * * colonne 4, ligne 3 - colonne 5, ligne 36 * * figures 3,4 * * revendications * --- | 1-9 | H04B7/26 |
| A | EP 0 884 864 A (ALSTHOM CGE ALCATEL) 16 décembre 1998 (1998-12-16) * le document en entier * ----- | 1-9 | |

|  |  |  | **DOMAINES TECHNIQUES RECHERCHES (Int.Cl.7)** |
|---|---|---|---|
|  |  |  | H04B |

Le présent rapport a été établi pour toutes les revendications

| Lieu de la recherche | Date d'achèvement de la recherche | Examinateur |
|---|---|---|
| LA HAYE | 17 mars 2003 | Dejonghe, O |

**EP 1 333 600 A1**

**ANNEXE AU RAPPORT DE RECHERCHE EUROPEENNE
RELATIF A LA DEMANDE DE BREVET EUROPEEN NO.**

EP 03 07 5321

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-2003

| Document brevet cité au rapport de recherche | Date de publication | Membre(s) de la famille de brevet(s) | Date de publication |
|---|---|---|---|
| EP 0978959 A | 09-02-2000 | FR 2777730 A1<br>AU 743541 B2<br>AU 2364799 A<br>EP 0978959 A1<br>HU 9900982 A2<br>JP 2000078649 A | 22-10-1999<br>31-01-2002<br>28-10-1999<br>09-02-2000<br>29-11-1999<br>14-03-2000 |
| EP 0884864 A | 16-12-1998 | FR 2764463 A1<br>AU 745205 B2<br>AU 6992898 A<br>CA 2239093 A1<br>CN 1202062 A<br>EP 0884864 A1<br>JP 11017640 A<br>US 6469996 B1 | 11-12-1998<br>14-03-2002<br>17-12-1998<br>10-12-1998<br>16-12-1998<br>16-12-1998<br>22-01-1999<br>22-10-2002 |

EPO FORM P0480

Pour tout renseignement concernant cette annexe : voir Journal Officiel de l'Office européen des brevets, No.12/82

7